# EUROPÄISCHE PATENTANMELDUNG

(11) **EP 1 927 789 A1**
(43) Veröffentlichungstag der Anmeldung: **04.06.2008**
(21) Anmeldenummer: 07021965.4
(22) Anmeldetag: 13.11.2007
(51) Int. Cl.: F16H 55/06, F16H 55/14, E05B 65/12, F16H 55/22

(54) **Kraftübertragungseinrichtung**

(30) Priorität: 17.11.2006 DE 202006017591 U
(71) Anmelder: Kiekert Aktiengesellschaft, 42579 Heiligenhaus (DE)
(72) Erfinder: Pohle, Werner, 44329 Dortmund (DE); Grothoff-Blulm, Christian, 58332 Schwelm (DE)

(57) **Zusammenfassung**

Die vorliegende Erfindung betrifft eine Kraftübertragungseinrichtung (2) zur Übertragung mechanischer Kräfte, insbesondere zum Einsatz in Kleingetrieben (3) eines Schlosses (4) eines Kraftfahrzeuges (5), mit wenigstens einem Übertragungselement (1), das eine Eingangs- und eine Ausgangsseite aufweist. Dabei sind Mittel vorgesehen, die eine Relativbewegung zwischen der Eingangs- und der Ausgangsseite zulassen.

## Beschreibung

Die vorliegende Erfindung betrifft eine Kraftübertragungseinrichtung zur Übertragung mechanischer Kräfte, insbesondere zum Einsatz in Kleingetrieben, mit wenigstens einem Übertragungselement, das eine Eingangs- und eine Ausgangsseite aufweist. Dabei sind Mittel vorgesehen, die eine Relativbewegung zwischen der Eingangs- und der Ausgangsseite zulassen.

Derartige Kraftübertragungseinrichtungen kommen beispielsweise bei motorisch angetriebenen Schließsystemen von Kraftfahrzeugen zur Anwendung. Dabei kann es aufgrund verschiedenartiger Einflüsse, wie etwa Blockfahrten gegen Anschläge, Verschleiß, Missbrauch oder Frost, zu Blockaden des mechanischen Antriebs kommen. Die damit verbundenen und auf die Bauteile der Kraftübertragungseinrichtung einwirkenden Belastungsspitzen können nach mehr oder weniger langen Zeiträumen zu Störungen der Funktionalität der Einrichtung führen.

So ist aus der DE 198 44 119 A1 eine mit einem Puffermechanismus ausgestattete Motoreinheit bekannt. Die darin offenbarte Vorrichtung besteht aus einer Vielzahl von einzelnen Bauteilen. Dies hat zur Folge, dass die Herstellung sehr kostenintensiv ist. Außerdem ist die Störanfälligkeit sowie der Verbau der Vorrichtung aufgrund der Vielzahl von Bauteilen verbesserungswürdig.

Die EP 0 549 817 B1 betrifft einen Kraftfahrzeug-Stellantrieb, bei dem ein Getrieberad vorgesehen ist, dass tangential elastische Dämpfungselemente aufweist. Zur Realisierung wird eine Mehrzahl federstegartiger Speichen vorgeschlagen, wobei das Getrieberad als einstückiges Spritzgussteil ausgeführt ist.

Aufgabe der Erfindung ist es daher, ein Zahnrad für eine Kraftübertragungseinrichtung zu schaffen, welche die genannten Nachteile vermeidet und eine besonders kostengünstige Fertigung ermöglicht. Darüber hinaus sollen die elastischen und/oder dämpfenden Eigenschaften des Zahnrades verbessert werden, um einen dauerhaften und sicheren Betrieb der Kraftübertragungseinrichtung zu gewährleisten.

Diese Aufgaben werden gelöst mit einem Zahnrad gemäß den Merkmalen des Schutzanspruchs 1. Weitere vorteilhafte Ausgestaltungen des Zahnrades sind in den abhängig formulierten Schutzansprüchen angegeben. Es ist darauf hinzuweisen, dass die in den Unteransprüchen einzeln aufgeführten Merkmale in beliebiger, technologisch sinnvoller Weise miteinander kombinierbar sind und weitere Ausgestaltungen der Erfindung definieren.

Erfindungsgemäß weist das Zahnrad für eine Kraftübertragungseinrichtung zum Einsatz in einem Kleinantrieb eines Schlosses eines Kraftfahrzeuges eine Antriebsseite, eine Abtriebsseite und Mittel, die eine Relativbewegung, insbesondere ein Verdrehen, zwischen der Antriebsseite und der Abtriebsseite zulassen, auf, wobei das Zahnrad, insbesondere ausschließlich und/oder einstückig, mit mindestens zwei hinsichtlich ihrer elastischen Eigenschaften verschiedene Arten Kunststoff gebildet ist, und weiter die Mittel mit einem ersten Kunststoff gebildet sind, der elastischer ist als der zweite Kunststoff, der zumindest die Antriebsseite bildet. Damit ist ein besonders einfacher und kostengünstig herzustellender Aufbau eines Zahnrades angegeben, der sicher die gewünschte Funktion erfüllt und auch in den eingangs beschriebenen Extremsituationen einen exakten und schonenden Betrieb der Kraftübertragungseinrichtung erlaubt.

Die einstückige Ausführungsform des Übertragungselements gemäß der vorliegenden Erfindung ist preiswert zu fertigen, einfach zu montieren, widerstandsfähig gegenüber Verschmutzungen und besonders zuverlässig, da sie nur aus einem einzigen Bauteil besteht. Darüber hinaus sind mit der Erfindung besonders kompakt gestaltete Übertragungselemente herstellbar.

Es ist bevorzugt, dass der erste weiche Kunststoff ein bei 20°C gemessenes E-Modul in einem Bereich von 10¹ bis unter 10⁴ N cm⁻² [Newton pro Quadratzentimeter], vorzugsweise in einem Bereich von und besonders bevorzugt in einem Bereich 10² bis unter 10⁴ N cm⁻² von 10³ bis unter 10⁴ N cm⁻² aufweist. So kann es weiterhin bevorzugt sein, dass der erste Kunststoff eine nach DIN 53 505 (Deutsche Industrienorm) bestimmte Shore-Härte A in einem Bereich von 10 bis 90, vorzugsweise in einem Bereich von 20 bis 85 und besonders bevorzugt in einem Bereich von 50 bis 85 und darüber hinaus bevorzugt in einem Bereich von 30 bis 70 aufweist. Ferner ist es erfindungsgemäß bevorzugt, dass der erste Kunststoff vernetzt ist. Als erster Kunststoff eignen sich insbesondere Elastomere und thermoplastische Elastomere. Bevorzugt ist der erste Kunststoff wenigstens einer aus der Gruppe folgender Kunststoffe: Kautschuk, Polyisopren, Poly(butatien-co-styrol), Butylkautschuk oder Polysulfidkautschuk, insbesondere Nitril-Butadien-Kautschuk, oder einer Mischung aus mindestens zwei davon.

Im Zusammenhang mit dem zweiten, im Vergleich zum ersten Kunststoff harten Kunststoff, vorzugsweise mit einer Shore-Härte A von größer 70, ist es bevorzugt, dass zumindest ein Teil, wie ein Block eines Block- oder Kammcopolymers, dieses zweiten Kunststoffs, eine Glas- bzw. Schmelztemperatur aufweist, die oberhalb, vorzugsweise um mindestens 10°C, bevorzugt um mindestens 30°C und besonders bevorzugt um mindestens 60°C oberhalb, der Gebrauchstemperatur des erfindungsgemäßen Zahnrads liegt. Die Gebrauchstemperatur des erfindungsgemäßen Zahnrads liegt in der Regel in einem Bereich von -30 bis +120°C, vorzugsweise in einem Bereich von -10 bis +110°C und besonders bevorzugt in einem Bereich von 0 bis 100°C. Weiterhin ist es bevorzugt, dass der zweite Kunststoff ein bei 20°C gemessenes E-Modul in einem Bereich von 10⁴ bis 10⁷ N cm⁻², vorzugsweise in einem Bereich von und besonders bevorzugt in einem Bereich 10⁵ bis 10⁷ N cm⁻² von 10⁵ bis 10⁶ N cm⁻² aufweist. In einer erfindungsgemäßen Ausgestaltung besonders bevorzugt sind Polymere mit einem bei 20°C bestimmtes E-Modul in einem Bereich von 2000 bis 5000 N mm⁻², vorzugsweise in einem Bereich von 2200 bis 4500 und besonders bevorzugt in einem Bereich von 2800 bis 3100 N mm⁻². Als Polymer mit diesen Eigenschaften ist insbesondere Polyoxymethylen, vorzugsweise in Form des Homopolymers zu nennen. So kann es weiterhin bevorzugt sein, dass der zweite Kunststoff eine nach DIN 53 505 bestimmte Shore-Härte B in einem Bereich von 30 bis 90, vorzugsweise in einem Bereich von 50 bis 90 und besonders bevorzugt in einem Bereich von 70 bis 85 aufweist. Durch diese Auswahl kann erreicht werden, dass der zweite Kunststoff vor allem in den Gebrauchstemperaturbereich eine hohe Festigkeit und gute Gleiteigenschaften aufweist. Weiter ist auch bevorzugt, dass der zweite Kunststoff wenigstens einer aus der Gruppe folgender Kunststoffe ist: Wenig oder nicht verzweigte Kettenpolymere wie Thermoplaste, beispielsweise Polyethylen, Polypropylen, Polyamide, Polyvinylchlorid, Polyimide, Polyacrylate wie Polymethylmethacrylate, Polystyrole sowie Block- oder Kammcopolymere wie Polystyrolpoylbutylacrylat, Polyacrylnitrilpolybutylacrylatpoylstyrol, insbesondere Polyoxymethylen, oder eine Mischung aus mindestens zwei davon. Weiterhin kann es im Zusammenhang mit dem zweiten Kunststoff bevorzugt sein, dass dieser durch ein oder einer Kombination von zwei oder mehren Verstärkungsmitteln wie Fasern, Gewebe, Gelege oder Gewirke in seiner Festigkeit erhöht ist, die in die Formmasse des zweiten Kunststoffes eingearbeitet sind. Als Materialien für diese Fasern, Gewebe, Gelege oder Gewirke kommen beispielsweise Kohle-, Glas-, oder Polytlourethylenfasem wie TEFLON^{®} in Betracht. Im Allgemeinen ist es bevorzugt, dass der erste Kunststoff eine geringere Härte als der zweite Kunststoff aufweist.

Dabei wird insbesondere vorgeschlagen, dass die Antriebsseite und die Abtriebsseite aus dem gleichen zweiten Kunststoff gebildet sind. Hierfür hat sich als vorteilhaft herausgestellt, dass die Antriebsseite und die Abtriebsseite nur über die Mittel aus dem ersten Kunststoff verbunden sind.

Dabei sind beispielsweise der äußere Zahnkranz und die innere Wellenaufnahme eines Zahnrads aus einer Hartkomponente und der dazwischen liegende Bereich aus einer Weichkomponente gefertigt. Auf diese Weise sind die stark belasteten Bereiche aus einer widerstandsfähigen Hartkomponente hergestellt und gleichzeitig wird eine gute Dämpfung durch die verwendete Weichkomponente erreicht. Bei bestimmten Anwendungen ist es darüber hinaus vorteilhaft mehrere Hart- und/oder mehrere Weichkomponenten gleichzeitig in einem Zahnrad bzw. ähnlichen Übertragungselement einzusetzen.

Allerdings ist auch möglich, dass die Antriebsseite und die Abtriebsseite über die Mittel aus dem ersten Kunststoff und wenigstens einen biegeschlanken Steg aus dem zweiten Kunststoff verbunden sind. Biegeschlank sind die Stege insbesondere dann, wenn ihre Erstreckung in Richtung des Radius deutlich größer als in Richtung des Umfanges des Zahnrades ist. Mit einer solchen Variante können insbesondere höhere Drehmomente dauerhaft übertragen werden.

Gemäß einer weiteren Variante wird vorgeschlagen, dass sich die, insbesondere kissenartig ausgebildeten, Mittel über mindestens die Hälfte eines Radius des Zahnrades erstrecken.

Gegebenenfalls kann auch sinnvoll sein, in Richtung eines Umfangs des Zahnrades gesehen verschiedenartige Formkörper die Mittel bilden. Somit wird insbesondere erreicht, dass das Zahnrad eine auf die belastungsabhängige Drehrichtung, die zu übertragende Kraft bzw. das zu übertragende Drehmoment und/oder den Krafteinleitungspunkt angepasste sowie gewichtsreduzierte Ausgestaltung aufweist.

Um eine gewünschte elastische und/oder dämpfende Eigenschaft des Zahnrades einzustellen, können die Mittel als Formkörper mit Hohlräumen und/oder Löchern ausgeformt sein. Ein Hohlraum betrifft insbesondere eine Materialaussparung, die (höchstens) nur hin zu einer Seite des Formkörpers eine Öffnung hat, während ein Loch eine Verbindung zu mindestens zwei Seiten des Formkörpers darstellt.

Bevorzugt ist, dass die Mittel an der Antriebsseite und der Abtriebsseite angespritzt sind.

Gleichwohl wäre auch möglich, dass die Komponenten des ersten Kunststoffes und des zweiten Kunststoffes separat hergestellt und schließlich miteinander gefügt bzw. montiert werden. Damit können regelmäßig hohe Zykluszeiten bei der Herstellung erreicht werden, wobei der Fügevorgang z.B. in einen Handhabungsprozess (wie beispielsweise einem Transport) integriert sein kann.

Eine besonders einfache, kostengünstige und zuverlässige Fertigung ist möglich, wenn das Zahnrad als Zwei-Komponenten-Bauteil ausgeführt ist. Die Herstellung als Zwei-Komponenten-Bauteil ist besonders preisgünstig, da große Stückzahlen in weitgehend automatisierter Weise gefertigt werden können. Zwei-Komponenten-Spritzgießverfahren beispielsweise, sind in der Industrie seit langem bekannt und im Einsatz, wodurch der Einsatz preiswerter und zuverlässiger Technologien möglich ist. Darüber hinaus entsteht bei diesem Verfahren ein einteiliges Bauteil, bei dem die Hart- und die Weichkomponente fest miteinander verbunden sind. Ein umständlicher Zusammenbau, wie er beispielsweise bei Zahnrädern mit einer Mehrzahl von Bauteilen erforderlich ist, entfällt damit. Zudem ist das erfindungsgemäße Zahnrad unempfindlich gegen Verschmutzungen und weist keinerlei Toleranzen zueinander auf, was die Zuverlässigkeit erhöht.

Gerade in diesem Fall ist es ggf. erforderlich, dass wenigstens die Antriebsseite oder die Abtriebsseite mit wenigstens einer Ausgestaltung der Mittel einen Eingriff bilden. Bevorzugt ist eine gerade Anzahl von Eingriffen vorgesehen, die insbesondere paarweise in einer Ebene des Zahnrades angeordnet sind, also insbesondere 2 oder 4 Eingriffe. Diese Eingriffe stellen einen vergrößerten Kontaktbereich der beiden Materialien zur Verfügung so dass sicher, so dass auch größere Kräfte übertragen werden können. Der Eingriff zeichnet sich insbesondere dadurch aus, dass der Kontaktbereich beider Materialien einen komplexeren Verlauf hat, also einen von einer Eben oder einem Kreisbogenabschnitt abweichenden Verlauf hat.

Entsprechend einer weiteren Ausgestaltung des Zahnrades sind die Mittel, insbesondere nur wesentlich, in Richtung des Umfangs des Zahnrades verformbar sind. Die Verformung des Zahnrades sollte jedoch beispielsweise dort begrenzt sein, wo in unerwünschtem Maße Relaxation auftritt. Diese könnte gerade bei einer Dauerbelastung im Ruhezustand des Zahnrades auftreten. Dieses durch das Rückstellbestreben (insbesondere der weicheren, ggf. während der Beanspruchung verformten Komponente) verursachte Relaxationsphänomen ist zumindest im wesentlichen Umfang zu vermeiden. Die Relaxation ist zumindest auf den Bereich zu beschränken, dass eine exakte Einhaltung der Endpositionen des Zahnrades während des Betriebes sichergestellt ist.

Besonders effizienten Einsatz findet das Zahnrad in einer Kraftübertragungseinrichtung zum Einsatz in einem Kleinantrieb eines Schlosses eines Kraftfahrzeuges, wobei dieses mit wenigstens einem Stellantrieb zusammenwirkt. Dabei ist insbesondere eine Variante bevorzugt, bei der der Stellantrieb einen Elektromotor umfasst, der ein Schneckenrad antreiben kann, wobei das Schneckenrad mit einer äußeren Antriebsseite des Zahnrades zusammenwirkten kann.

Besondere Einsatzgebiete sind Zentralverriegelungssysteme, Diebstahlsicherungssysteme, elektrische Öffnungssysteme des Türschlosses (Abheben der Sperrklinke), und der gleichen, also regelmäßig bei Kleinstantrieben, mit denen eine drehende bzw. rotatorische Bewegung in eine translatorische Bewegung (oder umgekehrt) umgewandelt wird.

Schließlich wird auch ein Kraftfahrzeug aufweisend wenigstens eine hier beschriebene Kraftübertragungseinrichtung eines Schlosses, insbesondere eines Schlosses für eine Tür, Klappe oder der gleichen, vorgeschlagen.

Weitere Vorteile der vorliegenden Erfindung sind im Zusammenhang mit den nachfolgenden Ausführungsbeispielen und der Zeichnung beschrieben. Es zeigen schematisch:
- Fig. 1: eine erste Ausführungsform einer Kraftübertragungseinrichtung;
- Fig. 2: eine zweite Ausführungsform einer Kraftübertragungseinrichtung;
- Fig.: 3 eine Veranschaulichung eines Einsatzortes einer Kraftübertragungseinrichtung; und
- Fig. 4: eine weitere Ausführungsform einer Kraftübertragungseinrichtung.

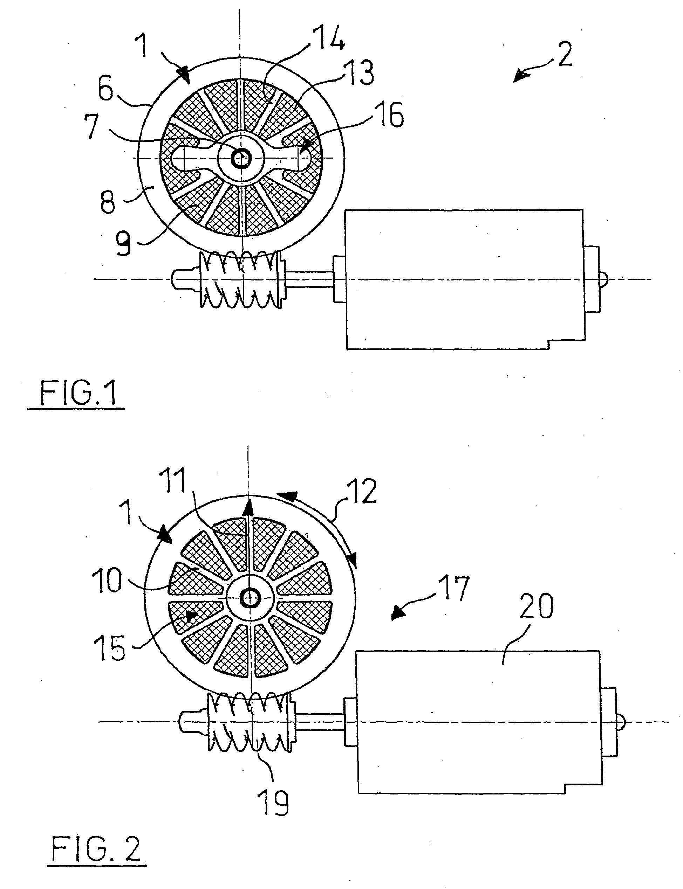

In Fig. 1 ist eine erste Ausführungsform eines erfindungsgemäßen Zahnrades 1 einer Kraftübertragungseinrichtung 2 in einer schematischen Darstellung aufgezeigt. Das Zahnrad 1 weist eine Antriebsseite 6 und eine Abtriebsseite 7 auf, wobei zwischen der Antriebsseite 6 und der Abtriebsseite 7 mehrere Mittel, insbesondere zum Beispiels Dämpfungselemente, vorgesehen sind, die ein (begrenztes) Verdrehen zulassen und mit einem elastischeren zweiten Kunststoff 9 gebildet sind als der erste Kunststoff 8 der Antriebs- und Abtriebsseite. Bei der veranschaulichten Variante ist die Abtriebsseite 7 nach Art eines Mitnehmers ausgeführt. Der Mitnehmer ist konzentrisch zur Antriebsseite 6 ausgebildet, die einen äußeren (nicht im Detail dargestellten) Zahnkranz hat und durch die Dämpfungselemente mit diesem verbunden. In einer zentrischen Bohrung des Mitnehmers kann schließlich z.B. eine Abtriebswelle eingesetzt werden, welche die Antriebskräfte zu ihrem Bestimmungsort weiterleitet. Mögliche Bestimmungsorte können beispielsweise ein Fensterheber- oder ein Schließsystemmechanismus eines Kraftfahrzeuges sein. Die Abtriebswelle ist gegebenenfalls mittels geläufiger Verbindungstechniken, wie etwa form- oder reibschlüssigen Verbindungen, fest mit dem Mitnehmer verbunden.

Kommt es nun durch einen Umstand zu einer Blockade der Abtriebswelle, würde dies zu einer sehr großen Kraftspitze an den Zähnen des Zahnkranzes führen. Dies wiederum kann Beschädigungen der Kraftübertragungseinrichtung verursachen. Durch die vorliegende Erfindung ist es möglich den äußeren Zahnkranz noch zu bewegen, wenn der innere Mitnehmer bereits zusammen mit der blockierenden Abtriebswelle stillsteht. Die so erzeugte Relativbewegung zwischen Zahnkranz und Mitnehmer wird durch die elastische Verformbarkeit der als Formkörper 13 ausgeformten Mittel bzw. Dämpfungselemente möglich, die insbesondere mit mehreren Hohlräumen 14 voneinander beabstandet sind. Diese werden bei fortschreitender Relativbewegung ausgelenkt und üben eine sanft anwachsende Bremskraft auf den Zahnkranz aus. Um auch höhere Kraftspitzen zuzulassen, weist das Zahnrad 1 zwei Eingriffe 16 auf, die einen besonders stabilen Verbund der beiden unterschiedlichen Kunststoffe bereitstellen.

In Fig. 2 ist eine zweite Ausführungsform eines Zahnrades 1 einer solchen Kraftübertragungseinrichtung 2 in einer schematischen Darstellung aufgezeigt.

Ein so genannter Stellantrieb 17 dient als Antrieb für diesen Kleinantrieb. Bei dem dargestellten Motor handelt es sich um einen Elektromotor 20. Im Zusammenhang mit der vorliegenden Erfindung können aber sämtliche Arten von Motoren zum Einsatz kommen, die ihre Antriebsleistung in Form einer Drehbewegung abgeben. Nach links tritt dazu aus dem Elektromotor 20 eine Antriebswelle aus, auf der axial ein Schneckenrad 19 befestigt ist. Das Schneckenrad 19 seinerseits greift in einen Zahnkranz bzw. der Antriebseite 6 des Zahnrades 1 ein. Zahnkranz und Schneckenrad wirken nach dem Prinzip eines Schneckengetriebes zusammen.

Diese Ausführungsform des Zahnrades unterscheidet sich im Aufbau der Mittel zur Gewährleistung einer Relativbewegung. Der übrige Aufbau entspricht dem zuvor im Zusammenhang mit Fig. 1 beschriebenen Aufbau. Das dargestellte Zahnrad 1 besteht aus einer einen Zahnkranz aufweisenden Antriebsseite 6 der über biegeschlanke Stege 10 mit der einen Mitnehmer aufweisenden Abtriebsseite 7 verbunden ist. Die Stege 10 sind in Richtung des Radius 11 angeordnet und relativ dünnwandig ausgeführt, so dass sie zwischen dem Zahnkranz und dem Mitnehmer eine Relativbewegung in Richtung des Umfangs 12 in gewünschtem Umfang beeinflussen. Die Zwischenräume zwischen den Stegen 10 sind mit den Mitteln aus dem zweiten Kunststoff 9 vollständig ausgefüllt, wobei ggf. darin auch Hohlräume 15 ausgeformt sein können. Neben der gezeigten vollständigen Füllung der Zwischenräume mit dem zweiten Kunststoff 9 können diese bei bestimmten Ausführungsformen auch nur einen Teil des Zwischenraums ausfüllen, wodurch sich dann neben den mechanischen Eigenschaften noch das Gewicht und die Herstellungskosten des Zahnrades 1 verringern.

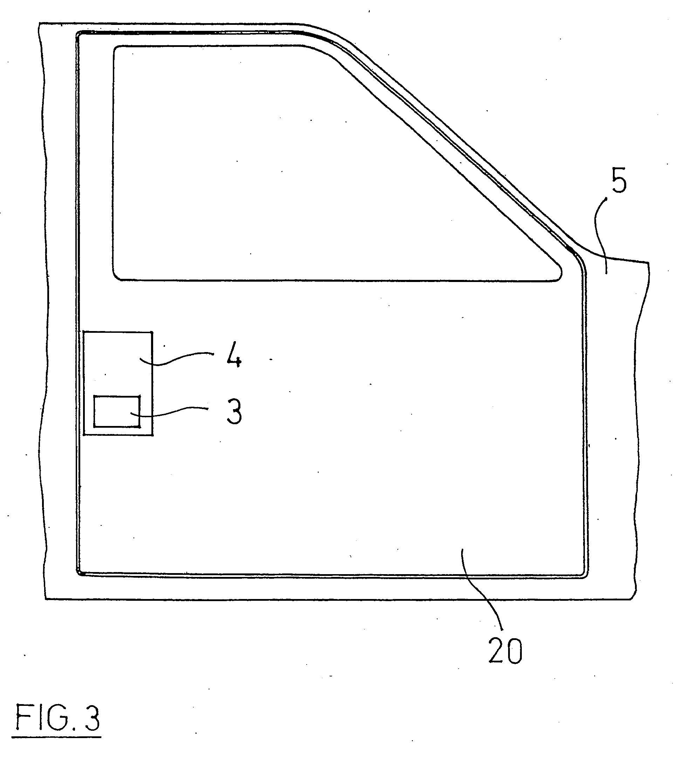

Fig. 3 veranschaulicht eine Einsatzvariante des Zahnrades 1 in einem Kleinantrieb 3 eines Schlosses 4 für eine Tür 20 eines Kraftfahrzeuges 5, beispielsweise um das Verstellen von Bauteilen des Schlosses 4 (wie die Drehfalle) zu unterstützen. Darüber hinaus können solche Kleinantriebe auch in Tankverschlüssen, Heckklappen, Schiebetüren oder ähnlichem untergebracht sein.

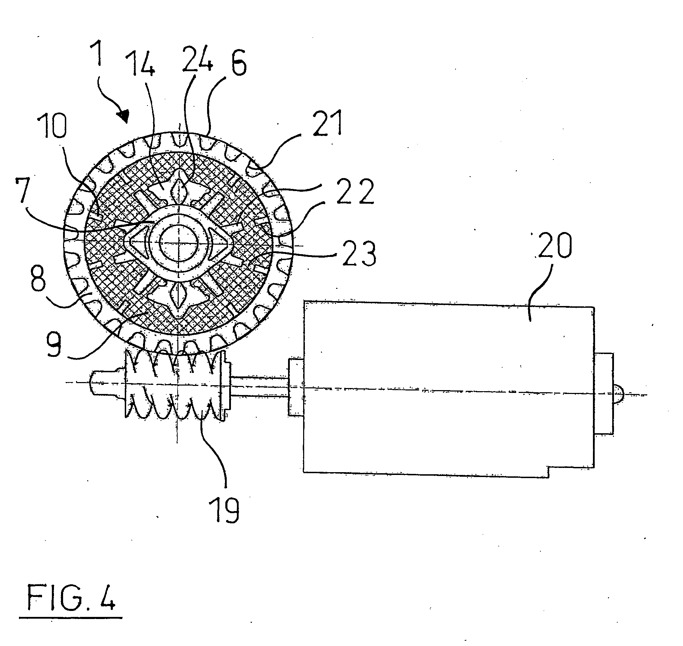

Fig. 4 veranschaulicht eine weitere Ausführungsvariante der Erfindung. Dabei ist das Zahnrad 1 mit einer, ein Profil 21 zum Eingriff mit dem Schneckenrad 19 aufweisenden Antriebsseite 6 ausgeführt, welche einen ersten Kunststoff 8 (vorzugsweise POM/H = Polyoxymethylen Homopolymer) umfasst. Diese weist nunmehr eine Mehrzahl von gleichmäßig über den Umfang verteilt angeordnete Stege 10 auf, die jeweils eine Unterbrechung 23 aufweisen, so dass diese letztlich nur noch einzelne Zapfen 22 an der Antriebsseite 6 oder der Abtriebsseite 7 bilden. Darüber hinaus sind zur Einstellung eines vorbestimmten Übertragungsverhaltens auch diverse Hohlräume 14 und darin hineinragende (den zweiten Kunststoff 9 (insbesondere NBR = Nitril Butadien Kautschuk) im Ruhezustand ggf. nicht berührende) Vorsprünge 24 vorgesehen.

Die vorliegende Erfindung ist nicht auf die dargestellten Ausführungsbeispiele beschränkt. Es sind vielmehr zahlreiche Abwandlungen der Erfindung im Rahmen des beanspruchten Schutzumfangs möglich. So ist es beispielsweise möglich, anstelle der beschriebenen alleinigen Verwendung des Zahnrades auch andere Sicherungseinrichtungen, wie etwa Überlast- bzw. Sicherheitskupplungen mit diesem in einer Kraftübertragungseinrichtung zu kombinieren. Außerdem können erfindungsgemäße Zahnräder auch in anderen Kraftübertragungseinrichtungen als den beschriebenen Schneckengetrieben eingesetzt werden. Beispielsweise können dies ein- oder mehrstufige Zahnradgetriebe sein, wie sie etwa zum Antrieb von Automobilen zur Anwendung kommen.

### Bezugszeichenliste

- 1: Zahnrad
- 2: Kraftübertragungseinrichtung
- 3: Kleinantrieb
- 4: Schloss
- 5: Kraftfahrzeug
- 6: Antriebsseite
- 7: Abtriebsseite
- 8: ersten Kunststoff
- 9: zweite Kunststoff
- 10: Steg
- 11: Radius
- 12: Umfangs
- 13: Formkörper
- 14: Hohlräumen
- 15: Löchern
- 16: Eingriff
- 17: Stellantrieb
- 18: Elektromotor
- 19: Schneckenrad
- 20: Tür
- 21: Profil
- 22: Zapfen
- 23: Unterbrechung
- 24: Vorsprung

## Patentansprüche

1. Zahnrad (1) für eine Kraftübertragungseinrichtung (2) zum Einsatz in einem Kleinantrieb (3) eines Schlosses (4) eines Kraftfahrzeuges (5), aufweisend eine Antriebsseite (6), eine Abtriebsseite (7) und Mittel, die eine Relativbewegung, insbesondere ein Verdrehen, zwischen der Antriebsseite (6) und der Abtriebsseite (7) zulassen, wobei das Zahnrad (1), insbesondere ausschließlich und/oder einstückig, mit mindestens zwei hinsichtlich ihrer elastischen Eigenschaften verschiedene Arten Kunststoff gebildet ist, und weiter die Mittel mit einem ersten Kunststoff (8) gebildet sind, der elastischer ist als der zweite Kunststoff (9), der zumindest die Antriebsseite (6) bildet.

2. Zahnrad (1) nach Anspruch 1, wobei der erste Kunststoff (8) eine Shore-Härte A in einem Bereich von 10 bis 90, vorzugsweise in einem Bereich von 20 bis 85 und besonders bevorzugt in einem Bereich von 50 bis 85 und darüber hinaus bevorzugt in einem Bereich von 30 bis 70 aufweist.

3. Zahnrad (1) nach Anspruch 1 oder 2, wobei der erste Kunststoff (8) wenigstens einer aus der Gruppe folgender Kunststoffe ist: Kautschuk, Polyisopren, Poly(butatien-co-styrol), Butylkautschuk oder Polysulfidkautschuk, insbesondere Nitril-Butadien-Kautschuk, oder einer Mischung aus mindestens zwei davon.

4. Zahnrad (1) nach einem der vorhergehenden Ansprüche, wobei der zweite Kunststoff (9) härter ist als der erste Kunststoff (8).

5. Zahnrad (1) nach einem der vorhergehenden Ansprüche, wobei der zweite Kunststoff (9) eine Schmelztemperatur aufweist, die oberhalb, vorzugsweise um mindestens 10°C, bevorzugt um mindestens 30°C und besonders bevorzugt um mindestens 60°C oberhalb, einer Gebrauchstemperatur des Zahnrads (1) liegt, wobei die Gebrauchstemperatur des Zahnrads (1) in der Regel in einem Bereich von -30 bis +120°C, vorzugsweise in einem Bereich von -10 bis +110°C und besonders bevorzugt in einem Bereich von 0 bis 100°C liegt.

6. Zahnrad (1) nach einem der vorhergehenden Ansprüche, wobei der zweite Kunststoff (9) ein E-Modul in einem Bereich von 2000 bis 5000 N mm⁻², vorzugsweise in einem Bereich von 2200 bis 4500 und besonders bevorzugt in einem Bereich von 2800 bis 3100 N mm⁻² aufweist.

7. Zahnrad (1) nach einem der vorhergehenden Ansprüche, wobei der zweite Kunststoff (9) wenigstens einer aus der Gruppe folgender Kunststoffe ist: wenig oder nicht verzweigte Kettenpolymere wie Thermoplaste, vorzugsweise Polyethylen, Polypropylen, Polyamide, Polyvinylchlorid, Polyimide, Polyacrylate wie Polymethylmethacrylate, Polystyrole sowie Block- oder Kammcopolymere wie Polystyrolpoylbutylacrylat, Polyacrylnitrilpolybutylacrylatpoylstyrol, insbesondere Polyoxymethylen, oder eine Mischung aus mindestens zwei davon.

8. Zahnrad (1) nach einem der vorhergehenden Ansprüche, wobei die Antriebsseite (6) und die Abtriebsseite (7) aus dem gleichen zweiten Kunststoff (9) gebildet sind.

9. Zahnrad (1) nach einem der vorhergehenden Ansprüche, wobei die Antriebsseite (6) und die Abtriebsseite (7) nur über die Mittel aus dem ersten Kunststoff (8) verbunden sind.

10. Zahnrad (1) nach einem der vorhergehenden Ansprüche, wobei die Antriebsseite (6) und die Abtriebsseite (7) über die Mittel aus dem ersten Kunststoff (8) und wenigstens einen biegeschlanken Steg (10) aus dem zweiten Kunststoff (9) verbunden sind.

11. Zahnrad (1) nach einem der vorhergehenden Ansprüche, wobei sich die, insbesondere kissenartig ausgebildeten, Mittel über mindestens die Hälfte eines Radius (11) des Zahnrades (1) erstrecken.

12. Zahnrad (1) nach einem der vorhergehenden Ansprüche, wobei in Richtung eines Umfangs (12) des Zahnrades (1) gesehen verschiedenartige Formkörper (13) die Mittel bilden.

13. Zahnrad (1) nach einem der vorhergehenden Ansprüche, wobei die Mittel als Formkörper (13) mit Hohlräumen (14) und/oder Löchern (15) ausgeformt sind.

14. Zahnrad (1) nach einem der vorhergehenden Ansprüche, wobei die Mittel an der Antriebsseite (6) und der Abtriebsseite (7) angespritzt sind.

15. Zahnrad (1) nach Anspruch 14, wobei wenigstens die Antriebsseite (6) oder die Abtriebsseite (7) mit wenigstens einer Ausgestaltung der Mittel einen Eingriff (16) bilden.

16. Zahnrad (1) einem der vorhergehenden Ansprüche, wobei die Mittel, insbesondere nur wesentlich, in Richtung des Umfangs (12) des Zahnrades (1) verformbar sind.

17. Kraftübertragungseinrichtung (2) zum Einsatz in einem Kleinantrieb (3) eines Schlosses (4) eines Kraftfahrzeuges (5) aufweisend zumindest ein Zahnrad (1) nach einem der vorgehenden Ansprüche und einen Stellantrieb (17), der mit dem Zahnrad (1) zusammenwirkt.

18. Kraftübertragungseinrichtung (2) nach Anspruch 17, wobei der Stellantrieb (4) einen Elektromotor (18) umfasst, der ein Schneckenrad (19) antreiben kann, wobei das Schneckenrad (19) mit einer äußeren Antriebsseite (6) des Zahnrades (7) zusammenwirkten kann.

19. Kraftfahrzeug (5) aufweisend wenigstens eine Kraftübertragungseinrichtung (2) nach Anspruch 17 oder 18 eines Schlosses (4), insbesondere eines Schlosses (4) für eine Tür, Klappe oder der gleichen.
